# EUROPEAN PATENT APPLICATION

(11) **EP 2 381 629 A1**
(43) Date of publication of application: **26.10.2011**
(21) Application number: 09836089.4
(22) Date of filing: 31.12.2009
(51) Int. Cl.: H04L 12/58

(54) **METHOD AND DEVICE FOR SENDING NOTIFICATION MESSAGE**

(30) Priority: 31.12.2008 CN 200810242217
(71) Applicant: Huawei Technologies Co., Ltd., Shenzhen, Guangdong 518129 (CN)
(72) Inventor: DENG, Rong c/o Huawei Technologies Co.Ltd, Int.Prop.Dept., Shenzhen (CN); LI, Kepeng c/o Huawei Technologies Co.Ltd, Int.Prop.Dept., Shenzhen (CN); ZHU, Wenjie c/o Huawei Technologies Co.Ltd, Int.Prop.Dept., Shenzhen (CN)
(74) Representative: Kreuz, Georg Maria
(86) International application number: PCT/CN2009/076330
(87) International publication number: WO 2010/075802

(57) **Abstract**

A method and device for sending a notification message are disclosed. The method includes: receiving, by a Presence Access Layer (PAL) server, a request message, where the request message includes a notification restraint condition; obtaining, by the PAL server, a service requester's information related to the notification restraint condition; determining, by the PAL server, whether the service requester's information related to the notification restraint condition satisfies the notification restraint condition; and when the notification restraint condition is not satisfied, sending, by the PAL server, the notification message according to the request message. The PAL server is adopted to determine whether the information of the service requester satisfies the notification restraint condition, which may reduce the burden of a client of the service requester and the interactive traffic between the client of the service requester and the PAL server, and may make network resources utilized more efficiently.

## Description

This application claims priority to Chinese Patent Application No. 200810242217.8, filed with the Chinese Patent Office on December 31, 2008 and entitled "METHOD AND DEVICE FOR SENDING NOTIFICATION MESSAGE", which is incorporated herein by reference in its entirety.

### FIELD OF THE INVENTION

The present invention relates to the field of communications, and in particular, to a method and device for sending a notification message.

### BACKGROUD OF THE INVENTION

A presence service is a communication service for collecting and publishing presence information. The basic service flow of the presence service is as follows. A watcher subscribes to presence information of a presentity from a presence server, a presentity client or application publishes the presence information to the presence server, and the presence server notifies the changed presence information of the presentity to the watcher. The presence information in the presence service includes online information, information of willingness for participating in a service, mood, activity, network status, and equipment capability. A presence information file is represented in a form of Presence Information Data Format (PIDF). The presence information is classified into service-related presence information, presentity-related presence information, and equipment-related presence information.

In the prior art, to reduce the complexity of the presence service, a Presence Access Layer (PAL) server is introduced to receive the presence information sent by the presence server, perform integrated computing, and then forward the presence information to a client of the watcher (that is, a service requester). The prior art has the following disadvantages: interaction between the client of the service requester and the PAL server is frequent, and the burden of the client of the service requester is heavy.

### SUMMARY OF THE INVENTION

The present invention is directed to a method and device for sending a notification message, which aims to reduce the burden of a client of a service requester, and the interactive traffic between the client of the service requester and a server, thereby utilizing network resources more efficiently.

According to its first aspect the present invention provides a method for sending a notification message, where the method includes in its first implementation form:
receiving, by a PAL server, a request message which includes a notification restraint condition;
obtaining, by the PAL server, a service requester's information related to the notification restraint condition;
determining, by the PAL server, whether the service requester's information related to the notification restraint condition satisfies the notification restraint condition; and
when the service requester's information related to the notification restraint condition does not satisfy the notification restraint condition, sending, by the PAL server, a notification message in response to the request message.

The method for sending a notification message includes in its second implementation form:
receiving a request message, where the request message includes a notification triggering condition, the notification message is sent to represent that the notification triggering condition is satisfied when a service receiver's specific aspect, which is an integration of one or more information elements, satisfies a preset value;;
obtaining the aspect-related information of the service receiver;
determining whether an aspect value of the related information satisfies the preset value; and
when the preset value is satisfied, sending the notification message.

According to its second aspect the present invention provides a PAL server, where the PAL server includes:
a service request receiving unit, configured to receive a request message which includes a notification restraint condition;
an obtaining unit, configured to obtain a service requester's information related to the notification restraint condition;
a determination unit, configured to determine whether the related information satisfies the notification restraint condition; and
a sending unit, configured to send a notification message in response to the request message when the related information does not satisfy the notification restraint condition.

According to its third aspect the present invention provides a device for sending a notification message, where the device includes:
a request receiving unit, configured to receive a request message, where the request message includes a notification triggering condition, the notification triggering condition is represented by the situation that the notification message is sent when a specific aspect of a service receiver satisfies a preset value, and the aspect is an integration of one or more information elements;
an obtaining unit, configured to obtain the service receiver's information related to the aspect;
a determination unit, configured to determine whether an aspect value of the related information satisfies the preset value; and
a notification unit, configured to send the notification message when the preset value is satisfied.

The present invention is directed to provide the method and device for sending a notification message, where the PAL server determines whether information of a service participant satisfies the notification restraint condition or notification triggering condition, and the notification triggering condition is represented by adopting the aspect, so as to lighten the burden of the client of the service requester and decrease the interactive traffic between the client of the service requester and the PAL server, thereby utilizing network resources more efficiently.

### BRIEF DESCRIPTION OF THE DRAWINGS

FIG. 1 is a flow chart of a method for sending a notification message according to an embodiment of the present invention;
FIG 2 is a flow chart of another method for sending a notification message according to an embodiment of the present invention;
FIG 3 is a flow chart of yet another method for sending a notification message according to an embodiment of the present invention;
FIG 4 is a schematic structural view of a PAL server according to an embodiment of the present invention;
FIG 5 is a schematic structural view of another PAL server according to an embodiment of the present invention;
FIG. 6 is a flow chart of a method for sending a notification message according to an embodiment of the present invention;
FIG 7 is a flow chart of another method for sending a notification message according to an embodiment of the present invention;
FIG 8 is a flow chart of yet another method for sending a notification message according to an embodiment of the present invention;
FIG 9 is a schematic structural view of a device for sending a notification message according to an embodiment of the present invention; and
FIG 10 is a schematic structural view of another device for sending a notification message according to an embodiment of the present invention.

### DETAILED DESCRIPTION OF THE EMBODIMENTS

In order to make the objectives, technical solutions and advantages of the present invention comprehensible, the present invention is further illustrated in detail in the following with reference to the accompanying drawings and embodiments. It should be understood that, the specific embodiments described here are merely intended to explain the present invention, but not to limit the present invention.

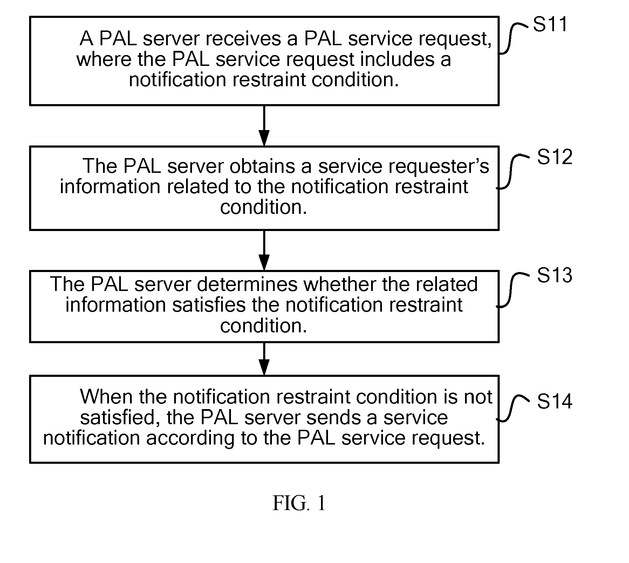

FIG 1 is a flow chart of a method for sending a notification message according to an embodiment of the present invention. The method includes the following steps.

In step S 11, a PAL server receives a request message which includes a notification restraint condition.

The request message is sent by a client of a service requester. The request message may be a service triggering request or a subscription request. The request service may be received by one or more parties. For example, the service requester may send a request to the PAL server for sending a session invitation to multiple persons.

The notification restraint condition indicates that when related information of the service requester satisfies a restraint condition, the PAL server does not perform an action.

In step S 12, the PAL server obtains the service requester's information related to the notification restraint condition.

The PAL server parses the notification restraint condition to learn information of the service requester the notification restraint condition involves, and then obtains the service requester's information related to the notification restraint condition from a corresponding server. The corresponding server may be a presence server or a location server. For example, if the notification restraint condition represents that the service requester is not online, no notification is sent to the service requester, information related to the notification restraint condition indicates a presence status of the service requester, and the PAL server obtains an online status of the service requester from the presence server.

In step S13, the PAL server determines whether the related information satisfies the notification restraint condition.

In the example of step S12, if the service requester is not online at this time, the notification restraint condition is satisfied; and if the service requester is online at this time, the notification restraint condition is not satisfied.

In step S14, when the notification restraint condition is not satisfied, the PAL server sends a notification message according to the request message.

The receiving party of the notification message may be a sending party of a service request, a requested party of the service request, or an application server.

For example, when the request message indicates the service triggering request, the PAL server may send a service triggering notification to the corresponding application server or a client of the requested party. When the request message indicates the subscription request, the PAL server sends a changed subscribed-to information notification to the service requester.

In this embodiment, the PAL server determines whether the information of the service requester satisfies the notification restraint condition before performing the corresponding operation requested by the request message, so that the burden of the client of the service requester is reduced, and the interactive traffic between the client of the service requester and the PAL server is reduced, thereby utilizing network resources more efficiently. The interference with the service requester is reduced, and the user experience is improved.

Furthermore, the notification restraint condition may be represented by the situation that a specific aspect of the service requester satisfies a preset value, and the aspect is an integration of one or more information elements.

The specific aspect may be one or more specific aspects. For example, the notification restraint condition demands that an aspect identified with "namel" and an aspect identified with "name2" satisfy the corresponding preset values respectively.

The preset value may be a value represented by "true" and "false" or a value range. The value range may be represented in a form of listing multiple values or in a form of a value interval, for example, a predefined range being greater than one value and less than another value.

The aspect mentioned in the embodiment of the present invention is logical abstraction of a single or multiple presence information elements or a combination of the presence information element and other types of information elements (including location information and personal basic information), that is, the aspect is a result obtained by integrating information related to the aspect according to a rule. The aspect in the PAL includes system-defined aspects, for example, "availability" (indicating online information) and "willingness" (indicating the willingness for participating in a service). Moreover, the PAL supports customization and extension of aspects, that is, different users, services and groups may customize required aspects.

Specifically, a definition of the aspect should include: which information is related to the aspect, and which value of the aspect is set when each information element satisfies a certain condition, that is, a rule for calculating the aspect. If the definition of the aspect is represented in an xml (Extensible Markup Language) format, the aspect may be, for example, as follows.

```
          <aspect name="convenience">
          <result id="a">
               <prs-elements>
                     <status>open</status>
                     <session-participation>closed</session-participation>
               </prs-elements>
               <loc-elements>
                     <in value="false">
                     <gs:Circle srsName="urn:ogc:def crs:EPSG::4326"
                              xmlns:gs="http://www.opengis.net/pidflo/1.0"
                              xmlns:gml="http://www.opengis.net/gml">
                            <gml:pos>42.5463 -73.2512</gml:pos>
                            <gs:radius uom="urn:ogc:def:uom:EPSG::9001">
                                850.24
                              </gs:radius>
                           </gs:Circle>
                    <in>
               </loc-elements>
               <value>true</value>
           </result>
           <result id="b">
                <prs-elements>
                      <status>others</status>
                      <session-participation>others</session-participation>
                </prs-elements>
                <loc-elements>
                  <in value="true">
                  </in>
                </loc-elements>
                <value>false</value>
           </result>
          </aspect>
```

Herein, an element <aspect> represents the definition of the aspect; an attribute "name" of the element <aspect> represents an identifier of the aspect, where the aspect is identified with "convenience" in this example; and besides the name, the aspect may be identified and distinguished by other means such as a sequence number or a link. A sub-element <result> of the element <aspect> represents the value of the aspect and has an attribute "id" for distinguishing different <result> elements, that is, different values of the aspect. The element <result> includes sub-elements <prs-elements>, <loc-elements> and <value>, representing a presence information element, a location information element and the value of the aspect respectively, and the element <result> may also be extended to include more sub-elements to support more types of information elements. The element <prs-elements> includes sub-elements <status> and <session-participation>, the values of which are respectively "open" and "closed", indicating online information and being participating in a session respectively. The element <loc-elements> includes a sub-element <in> representing whether the location is in this region, and a value of an attribute "value" of the element <in> is "false", indicating that the location is not in this region. A sub-element <Circle> of the element <in> represents region information, and sub-elements <pos> and <radius> of the element <Circle> represent a center of a circle and a radius respectively. The value of <value> is "true", which indicates that when the value of the presence information element and the value of the location information element are set as the foregoing values, the value of the aspect is "true" . The meaning of each sub-element in the element <result> whose id is "b" is the same as that of each sub-element in the element <result> whose id is "a", and only their values are different. "others" indicates that when the values of the presence information element and the value of the location information element are set as other values, the value of the aspect is "false".

Furthermore, the aspect also supports nesting, that is, the aspect may be composed of other multiple aspects. Specifically, the value of the aspect depends on values of other relevant aspects. For example, an aspect "reachability" may be composed of an aspect "availability" and an aspect "willingness". If the definition of the aspect adopts the xml format, the aspect may be represented as follows.

```
          <aspect name="reachability">
             <result id="a">
                <sub_aspect name="availability">
                    true
                </sub-aspect>
                <sub_aspect name= "willingness">
                    true
                </sub_aspect>
                <value>true</value>
             </result>
             <result id="a">
                <sub_aspect name="availability">
                    false
                </sub_aspect>
                <sub_aspect name= "willingness">
                    false
                </sub_aspect>
                <value>false</value>
             </result>
          </aspect>
```

Herein, <sub_aspect> represents a relevant aspect defined by the aspect and is called as a sub-aspect in the present invention, and an attribute "name" of <sub_aspect> represents an identifier of the sub-aspect.

The notification restraint condition is represented as follows when the specific aspect of the service requester satisfies the preset value.

```
          <?xml version=" 1.0" encoding="UTF-8"?>
          <pal-suppnot-filter xmlns="urn:oma:xml:prs:pidf:oma-palsuppnotfilter">
                    <suppnot-filter id="a">
                          <aspect>
                                 <name> convenience</name>
                                 <value>false</value>
                          </aspect>
                          <inexecution>
                                 <service>IM-session</service>
                          </inexecution>
                    </suppnot-filter>
                       </pal-suppnot-filter>
```

That is, when the value of the aspect identified with "convenience" is "false", a service triggering notification for an Instant Messaging (IM) session is not sent. The aspect in the above mentioned example may also be represented as follows.

```
          </aspect>
          <name>convenience</name>
                              <value id="a">session-inconvenience </value>
                              <value id="b">location-inconvenience</value>
                          </aspect>
```

That is, when the value of the aspect identified with "convenience" is any one of multiple values, the service triggering notification for the IM session is not sent.

When the notification restraint condition is represented by the situation that the specific aspect of the service requester satisfies the preset value, step S12 specifically includes the following steps.

The PAL server obtains the definition of the aspect according to the notification restraint condition and obtains the service requester's information related to the aspect according to the definition of the aspect.

The notification restraint condition may carry the following information: (1) the identifier of the aspect, as described in the above mentioned example of the notification restraint condition; and (2) the definition of the aspect, that is, the notification restraint condition includes the definition of the aspect directly.

When the notification restraint condition includes only the identifier of the aspect, the PAL server needs to look up the definition of the aspect corresponding to the identifier of the aspect. The aspect may be predefined and saved in a specific storage device, and the PAL server may obtain the definition of the aspect from the specific storage device through a GET method in XCAP (Xml configuration access protocol), and obtain the required information of the service requester from a server saving information related to the definition according to the definition of the aspect.

When the notification restraint condition carries the definition of the aspect, the PAL server directly obtains the required information of the service requester from the server saving the information related to the definition according to the definition of the aspect.

Moreover, the PAL server may save the definition of the aspect and return a storage path of the definition of the aspect to the service requester.

Specifically, the definition of the aspect is saved in a specific storage device, for example, an XDMS (XML Document Management Server). The definition of the aspect may be saved in the specific storage device according to an instruction of the client, or the PAL server actively saves the definition of the aspect in the specific storage device when finding that the definition of the aspect carried in the notification restraint condition is not saved.

The determining, by the PAL server, whether the related information satisfies the notification restraint condition in step S13 includes the following steps.

The PAL server calculates an aspect value of the aspect-related information of the service requester according to the definition of the aspect.

As described above, the definition of the aspect includes the rule for calculating the value of the aspect. The PAL server needs to calculate the aspect value of the aspect-related information of the service requester, so as to compare the preset value of the aspect required in the notification restraint condition. For example, according to the above mentioned example of the definition of the aspect, if the service requester is online at this time and does not participate in the session, the PAL server calculates the value of the aspect identified with "convenience" as "true".

After calculating the value of the aspect, the PAL server further needs to determine whether the value of the aspect satisfies the preset value. If the preset value is not satisfied, the PAL server determines that the notification restraint condition is not satisfied.

In the above mentioned example, the PAL server calculates the value of the aspect identified with "convenience" as "true". The value of the aspect identified with "convenience", which does not satisfy the notification restraint condition, is set as "false", that is, the notification restraint condition is not satisfied.

In this embodiment, the notification restraint condition is represented by the situation that the specific aspect of the service requester satisfies the preset value, so that the service requester only needs to carry a small amount of information in the request message, thereby reducing the burden of the client of the service requester.

In the embodiment of the present invention, specifically, the request message in step S11 may be a service triggering request or a subscription request.

The service triggering request refers to a request for triggering or not triggering a service according to a preset value. At this time, the service triggering request generally carries a notification triggering condition to request the PAL server to determine whether information related to a service receiver satisfies the notification triggering condition. Definitely, the PAL server may also decide whether to trigger the service according to information related to the service requester, as described in the above mentioned example of the notification restraint condition.

When the request message is about the subscription request, the PAL server receives the subscription request and then subscribes to information related to a subscribed-to party according to the subscription request. Hereinafter, the information related to the subscribed-to party that is subscribed to is called subscribed-to information. The notification message required to be sent is about a changed subscribed-to information notification, that is, changed subscribed-to information is notified to the service requester. The subscribed-to information may be represented by adopting the aspect. The aspect value of the changed subscribed-to information may be calculated and notified to the service requester.

At this time, the determining, by the PAL server, whether the service requester's information related to the notification restraint condition satisfies the notification restraint condition is specifically as follows: when the subscribed-to information is changed, the PAL server determines whether the related information of the service requester satisfies the notification restraint condition.

When the PAL server determines that the notification restraint condition is not satisfied, the PAL server notifies the changed subscribed-to information to the service requester.

In another embodiment of the present invention, the request message in step S11 may further include a notification triggering condition, and the PAL server further needs to obtain the service receiver's information related to the notification triggering condition and determine whether the service receiver's information related to the notification triggering condition satisfies the notification triggering condition. Only when the service receiver's information related to the notification triggering condition satisfies the service triggering condition, and when the service requester's information related to the notification restraint condition does not satisfy the notification restraint condition, the PAL server sends the notification message.

The notification triggering condition may be represented by the situation that the notification message is sent when a specific aspect of the service receiver satisfies a preset value, and the aspect is an integration of one or more information elements.

The PAL server further determines whether an aspect value of aspect-related information of the service receiver satisfies the preset value. When the preset value is satisfied, the PAL server determines that the notification triggering condition is satisfied.

In this embodiment, before sending the notification message, the PAL server decides whether to send the notification message by determining whether the related information of the service receiver and the related information of the service requester satisfy the corresponding conditions, The notification triggering condition is represented by the situation that the specific aspect satisfies the preset value. Therefore, the burden of the client and the interactive traffic between the client and the server are reduced, thereby improving utilization efficiency of network resources, and making the requester perform operation simply and conveniently.

Moreover, in the embodiment of the present invention, when the service requester's information related to the notification restraint condition satisfies the notification restraint condition, the PAL server monitors the service requester's information related to the notification restraint condition. At this time, the PAL server does not send the notification message, but monitors the related information of the service requester. After the related information of the service requester is changed, the PAL server determines whether the changed information related to the service requester satisfies the notification restraint condition. The PAL server does not send the notification message until the notification restraint condition is not satisfied any more.

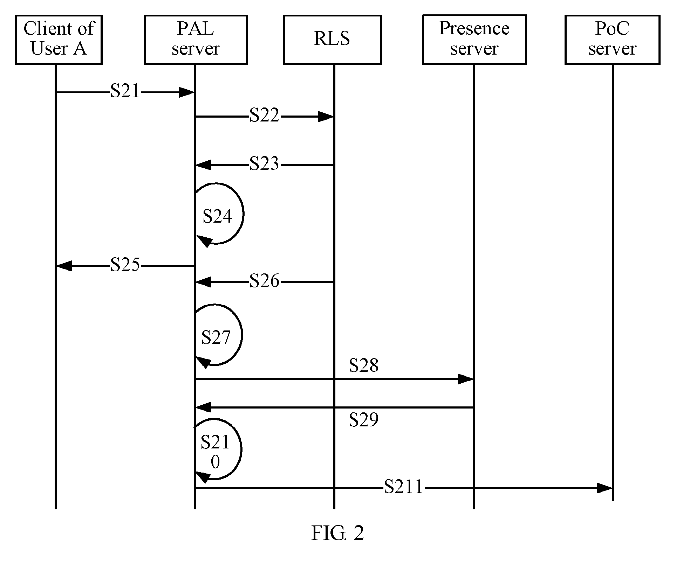

FIG 2 is a flow chart of another method for sending a notification message according to an embodiment of the present invention, where a request message is about a service triggering request and includes a notification restraint condition and a notification triggering condition. The notification restraint condition is represented by the situation that a specific aspect of a service requester satisfies a preset value. The notification triggering condition is represented by the situation that a service is triggered when a specific aspect of a service receiver satisfies a preset value.

In this embodiment, user A wishes to make a group session when values of aspects of his five workmates identified with "PoC-willingness" are "true", that is, a PAL server triggers a PoC (Push-to-talk Over Cellular) server to initiate the group session. But if user A participates in other sessions at the same time, that is, a value of an aspect identified with "session-convenience" is "false", the PAL server does not trigger a service.

In step S21, user A sends a service triggering request to the PAL server through a PAL client, where the request includes a notification triggering condition and a notification restraint condition. If the request message is implemented by adopting SIP SUBSCRIBE, the message is shown as follows.

```
          SUBSCRIBE sip:workmates@example.com Snip/2.0
          Via: SIP/2.0/TCP terminal.example.com;
          branch=z9hG4bKwYb6QREiCL
          Max-Forwards: 70
          To: <sip:workmates@example.com>
          From: <sip:a@example.com>;tag=ie4hbb8t
          Call-ID: cdB34qLToC@terminal.example.com
          CSeq: 322723822 SUBSCRIBE
          Contact: <sip:terminal.example.com>
          Event:pal
          Expires:600
          Accept: application/resource-lists+xml
          Content-Length: ......
          Content-Type: multipart/mixed; boundary=example-1
          --example-1
          Content-Type: application/pal-trigger+xml
          <?xml version="1.0" encoding="UTF-8"?>
             <pal-trigger xmlns="urn:oma:xml:pal-trigger">
                 <trigger>
                     <condition>
                       <changed to="true">
                           <aspect>PoC-willingness</aspect>
                       </changed>
                       <number flag="min">5</number>
                     </condition>
                     <action id="a">
          <service>PoC-groupsession</service>
                     </action>
                 </trigger>
             </pal-trigger>
          --example-1 I
          Content-Type: application/pal-suppnot-filter+xml
          <?xml version="1.0" encoding="UTF-8"?>
          <pal-suppnot-filter xmlns="urn:oma:xml:prs:pidf:oma-palsuppnotfilter">
                    <suppnot-filter id="a">
                          <aspect>
                                 <name>session-convenience</name>
                                 <value>false</value>
                          </aspect>
                    </suppnot-filter>
          </pal-suppnot-filter>
          --example-1--
```

Here, an element <pal-trigger> represents an aspect trigger in the PAL, where the aspect trigger is configured to monitor a change of a value of the aspect, and when the value of the aspect satisfies the aspect trigger, the PAL server performs a corresponding operation. A sub-element <trigger> of the element <pal-trigger> represents a specific trigger setting and includes sub-elements <condition> and <action> which respectively represent a triggering condition and a triggered action when the triggering condition is satisfied. A sub-element <changed> of the element <condition> represents a change of a value; a value of an attribute "to" of the element <changed> is "true", indicating that the value is changed to "true"; and a value of a sub-element <aspect> of the element <changed> is "PoC-willingness", indicating that the condition is to monitor the change of the value of the aspect "PoC-willingness". The other element <action> has a sub-element <service> representing a type of a service triggered when the triggering condition is satisfied, and the type of the service is PoC-groupsession, that is, a PoC group session, in this embodiment.. An element <number> is a sub-element of the element <condition>, representing a condition that should be satisfied by the number of persons satisfying the condition represented by the element <changed>; a value of an attribute "flag" of the element <number> is "min", indicating the minimum number of persons. Furthermore, in the second part of the message body, an element <pal-suppnot-filter> represents a service triggering restraint condition; a sub-element <suppnot-filter> of the element <pal-suppnot-filter> represents a specific restraint condition; a sub-element <aspect> of the element <suppnot-filter> represents an aspect that the restraint condition is based on; and elements <name> and <value> are sub-elements of the element <aspect>, respectively representing an identifier and a value of the aspect.

Herein, the notification restraint condition is based on the value of the aspect "session-convenience" of user A. The element <pal-suppnot-filter> represents the restraint condition, that is, when the value of the <aspect> of user A identified with "session-convenience" is "false", the PAL server does not trigger the PoC group session.

In step S22, the PAL server parses the received request, and then obtains information of the workmates of user A, related to the aspect "PoC-willingness", from RLS (a Resource List Server ).

Specifically, the PAL server first obtains a definition of the aspect identified with "PoC-willingness" from a server saving definitions of aspects to find which information elements are involved in the definition, and then obtains the information of the workmates of user A, related to the aspect "PoC-willingness", from the RLS.

In step S23, the RLS returns the related information of the workmates of user A.

In step S24, the PAL server calculates the value of the aspect "PoC-willingness" of each workmate of user A according to a calculation rule defined in the aspect "PoC-willingness", and determines whether a group session triggering condition is satisfied, that is, whether the number of the persons whose aspect values are "true" is at least five. At this time, if the number of the persons whose aspect values are "true" is less than five, the PAL server determines that the triggering condition is not satisfied currently. The PAL server continues to monitor the information of each workmate in a list related to the aspect "PoC-willingness".

In step S25, the PAL server notifies URIs of the workmates satisfying the condition currently to the PAL client of the service requester. The notification message is also implemented by adopting SIP NOTIFY, which is shown as follows.

```
          NOTIFY sip:a@example.com SIP/2.0
          Via: SIP/2.0/TCP pal-server.example.com;branch=z9hG4bK4EPlfSFQK1
          Max-Forwards: 70
          From: <sip:pal-server.example.com>;tag=zpNctbZq
          To: <sip:a@example.com>;tag=ie4hbb8
          Call-ID: cdB34qLToC@terminal.example.com
          CSeq: 997935769 NOTIFY
          Contact: <sip:pal-server.example.com>
          Event: pal
          Subscription-State: active;expires=600
          Content-Type: application/resource-lists+xml
          Content-Length: ......
          <?xml version=" 1.0" encoding="UTF-8"?>
             resource-lists xmlns="urn:ietf:params:xml:ns:resource-lists"
                  xmlns:xsi="http://www.w3.org/2001/XMLSchema-instance">
                <list>
                  <entry uri="sip:workmate1@example.com"/>
                  <entry uri="sip:workmate5@example.com"/>
                </list>
             </resource-lists>
```

Herein, an element <resource-lists> represents workmates satisfying the condition; a sub-element <list> of the element <resource-lists> represents a list of workmates and has a sub-element <entry> representing information of a single workmate satisfying the condition; and an attribute "uri" of the element <entry> represents an identity of the workmate.

In step S26, the RLS notifies changed presence information of workmates of user A to the PAL server.

In step S27, the PAL server calculates a value of the aspect "PoC-willingness" of each workmate of user A again, and finds that the triggering condition is satisfied.

In step S28, the PAL server obtains information of user A related to the aspect "session-convenience" from a presence server.

Specifically, the PAL server obtains a definition of the aspect identified with "session-convenience" from the server saving definitions of aspects, and then obtains the information of user A, related to the aspect "session-convenience", from the presence server according to the definition.

In step S29, the presence server returns presence information of user A to the PAL server.

In step S210, the PAL server calculates a value of the aspect "session-convenience" of user A, and finds that the value is "true". In this case, the value "false" specified in the service triggering restraint condition set by user A is not satisfied, and thus the group session may be triggered.

If the value of the aspect "session-convenience" of user A calculated by the PAL server is "false", that is, the service triggering restraint condition is satisfied, the PAL server does not send a group session triggering notification, but continues to monitor user A's information related to the aspect "session-convenience".

In step S211, the PAL server sends a group session triggering notification to the PoC server, where the notification includes identifiers of persons participating in the group session and the fact that the triggered service is the group session. If the notification message is implemented by adopting SIP MESSAGE, the message is shown as follows.

```
          MESSAGE sip:PoC-server.example.com SIP/2.0
          From: sip:pal-server.example.com;tag=49513
          To: sip: PoC-server.example.com
          Content-Type: application/pal-sernot+xml
          <?xml version=" 1.0" encoding="UTF-8"?>
          <pal-sernot xmlns="urn:oma:xml:pal-sernot"
          xmlns:l="urn:ietf:params:xml:ns:resource-lists">
          <l:list>
          <l:gentry uri="sip:a@example.com"/>
          <l:entry uri="sip:workmate1@example.com"/>
          <l:gentry uri="sip:workmate7@example.com"/>
          <l:gentry uri="sip:workmate14@example.com"/>
          <l:entry uri="sip:workmate15@example.com"/>
          <l:entry uri="sip:workmate21@example.com"/>
          </l:list>
          <service>
             PoC-groupsession
          </service>
          </pal-sernot>
```

In the embodiment of the present invention, the service triggering request carries the notification triggering condition and the notification restraint condition, the conditions are represented by the situation that the aspect satisfies the preset value, and the PAL server determines whether to trigger the service according to the related information of the service receiver and the service requester. Therefore, the burden of the client of the service requester and the interactive traffic between the client and the PAL server are reduced, thereby improving utilization efficiency of network resources, and making the requester perform operation simply and conveniently.

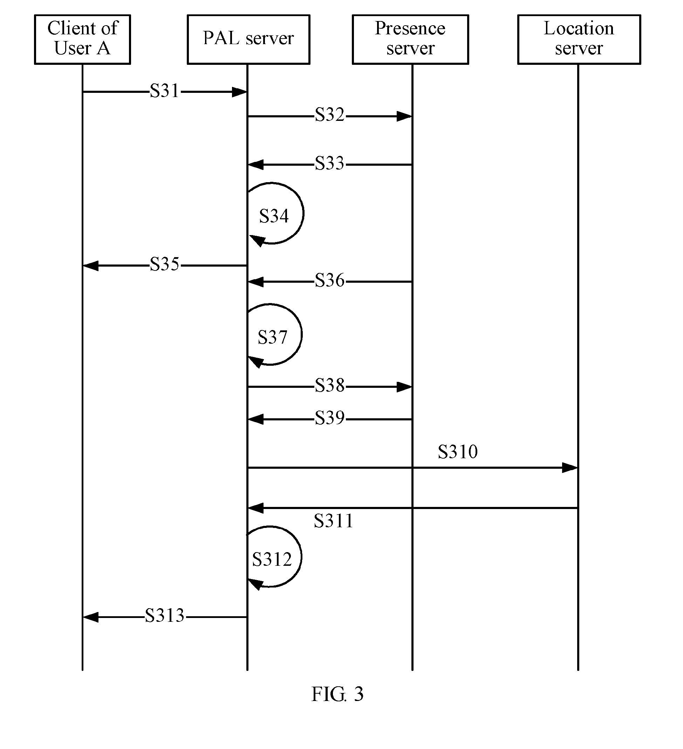

FIG 3 is a flow chart of yet another method for sending a notification message according to an embodiment of the present invention. In this method, a request message is about a subscription request. User A wishes to make a CPM (Converged IP Messaging) session with user B, and use A concerns whether user B may be contacted through CPM. Then, user A subscribes to an aspect "CPM-reachability" of user B from a PAL server and wishes that the server does not send a change notification of the aspect of user B, identified with "CPM-reachability", to user A when user A is inconvenient to make a session (user A is making a session with others or is in the conference room), that is, a value of an aspect "convenience" of user A is "false".

In step S31, user A sends a request to the PAL server through a PAL client for subscribing to a value of an aspect "CPM-reachability" of user B, where the subscription request carries a notification restraint condition set by user A, that is, if the value of the aspect "convenience" of user A is "false", the server does not send any notification to user A. If the subscription request adopts SIP SUBSCRIBE, the message is shown as follows.

```
          SUBSCRIBE sip:b@example.com SIP/2.0
          Via: SIP/2.0/TCP terminal.example.com;
          branch=z9hG4bKwYb6QREiCL
          Max-Forwards: 70
          To: <sip:b@example.com
          From: <sip:a@example.com>;tag=ie4hbb8t
          Call-ID: cdB34qLToC@terminal.example.com
          CSeq: 322723822 SUBSCRIBE
          Contact: <sip:terminal.example.come
          Event:pal
          Expires:600
          Accept: application/aspect-result+xml
          Content-Length: ......
          Content-Type: multipart/mixed; boundary=example-1
          --example-1
          Content-Type: application/pal-aspect+xml
          <?xml version="1.0" encoding="UTF-8"?>
          <pal-aspect xmlns="urn:oma:xml:pal-aspect">
               <aspect id="a">
                   CPM-reachability
               </aspect>
          </pal-aspect>
          --example-1
          Content-Type: application/pal-suppnot-filter+xml
          <?xml version=" 1.0" encoding="UTF-8"?>
          <pal-suppnot-filter xmlns="urn:oma:xml:prs:pidf:oma-palsuppnotfilter">
                    <suppnot-filter id="a">
                          <aspect>
                                 <name>convenience</name>
                                 <value>false</value>
                          </aspect>
                    </suppnot-filter>
          </pal-suppnot-filter>
          --example-1--
```

Herein, in the first part of the message body, an element <pal-aspect> represents information of subscribed-to aspects; a sub-element <aspect> of the element <pal-aspect> represents information of a single subscribed-to aspect, which is "CPM-reachability" in this embodiment. Furthermore, the meaning of each element in the second part of the message body is the same as that of the corresponding element in the embodiment shown in FIG 2, so that the details will not be described herein again.

In step S32, the PAL server parses the received subscription request and obtains related presence information of user B from a presence server according to a definition of the aspect "CPM-reachability" .

Specifically, the definition of the aspect "CPM-reachability" is first obtained from a server saving definitions of aspects, and then the presence information of user B related to the definition of the aspect is obtained from the presence server.

In step S33, the presence server returns the related presence information of user B.

In step S34, the PAL server performs calculation on the received related presence information of user B according to a calculation rule defined in the aspect "CPM-reachability" to obtain a current value of the aspect of user B.

In step S35, the PAL server notifies the current value of the aspect "CPM-reachability" of user B to the PAL client of user A. If the notification message adopts SIP MESSAGE, the message is shown as follows.

```
          NOTIFY sip:a@example.com SIP/2.0
          Via: SIP/2.0/TCP pal-server.example.com;branch=z9hG4bK4EPlfSFQKl
          Max-Forwards: 70
          From: <sip:pal-server.example.com>;tag=zpNctbZq
          To: <sip:a@example.com>;tag=ie4hbb8
          Call-ID: cdB34qLToC@terminal.example.com
          CSeq: 997935769 NOTIFY
          Contact: <sip:pal-server.example.com>
          Event: pal
          Subscription-State: active;expires=600
          Content-Type: application/aspect-result+xml
          Content-Length: ......

          <?xml version=" 1.0" encoding="UTF-8"?>
          <pal-result xmlns="urn:oma:xml:pal-result">
               <entry uri="sip:b@example.com">
                  <aspect name="CPM-reachability">true</aspect>
             </entry>
          </pal-result>
```

Herein, the meaning of each element is the same as that of the corresponding element in the embodiment shown in FIG 2, so that the details will not be described herein again.

In step S36, the presence server notifies changed presence information of user B to the PAL server.

In step S36, the PAL server calculates a value of the aspect "CPM-reachability" of user B again.

In step 38, the PAL server obtains presence information of user A related to the aspect "convenience" from the presence server.

Specifically, a definition of the aspect "convenience" is first obtained from a server saving definitions of aspects, and then the presence information of user A, related to the aspect, is obtained from the presence server.

In step S39, the presence server returns the presence information of user A to the PAL server.

In step 310, the PAL server obtains location information of user A, related to the aspect "convenience", from a location server.

Since the definition of the aspect "convenience" also involves the location information of user A, the PAL server further needs to obtain the location information of user A, related to the aspect "convenience", from the location server.

In step 311, the location server returns the location information of user A to the PAL server.

In step 312, the PAL server calculates a current value of the aspect "convenience" of user A according to the received presence information and location information of user A and the definition of the aspect "convenience", and finds that the value is "true", and thus the notification restraint condition is not satisfied.

In step 313, the PAL server notifies changed presence information of user B to the PAL client of user A, where the presence information may be represented by a changed value of the aspect "CPM-reachability" of user B.

In this embodiment, the subscription request includes the notification restraint condition set by a requester according to status information of the requester, and the PAL server decides whether to send a notification by determining whether the current status of the requester satisfies the notification restraint condition before sending the notification. In this way, the PAL server may avoids sending a notification that the requester does not wish to receive, so that the interference with the requester is reduced, and the interactive traffic between the client of the requester and the server is reduced, thereby utilizing network resources more efficiently.

Furthermore, in the embodiment in FIG 3, a notification triggering condition may also be added in the subscription request, that is, only when subscribed-to information satisfies a predefined condition, the PAL server determines whether the status information of the requester satisfies the notification restraint condition.

Specifically, the notification triggering condition may be represented as follows.

```
          <pal-trigger xmlns="urn:oma:xml:pal-trigger">
                     <changed to="available">
                    <aspect id="a">IM-availability</aspect>
                 </changed>
          </pal-trigger>
```

That is, only when a value of an aspect "IM-availability" of a subscribed-to party is "available", it is determined whether to send changed subscribed-to information, and specifically to send the aspect value of the subscribed-to information, to the client of the requester. Therefore, the burdens of the client of the requester and the PAL server, and the interaction between the client of the requester and the PAL server may be further reduced.

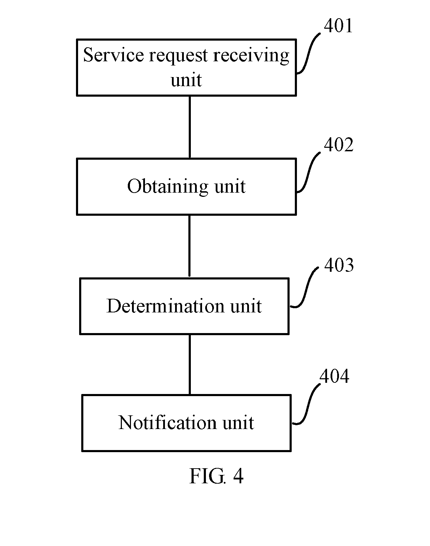

FIG 4 is a schematic diagram of a PAL server according to an embodiment of the present invention. The PAL server includes a service request receiving unit 401, an obtaining unit 402, a determination unit 403, and a notification unit 404.

The service request receiving unit 401 is configured to receive a request message, where the request message includes a notification restraint condition.

For the specific process of implementing the function by the service request receiving unit 401, reference may be made to the description in step S11.

The obtaining unit 402 is configured to obtain a service requester's information related to the notification restraint condition.

For the specific obtaining process, reference may be made to the description in step S 12.

The determination unit 403 is configured to determine whether the related information satisfies the notification restraint condition.

For the specific determining process, reference may be made to the description in step S 13.

The notification unit 404 is configured to send a notification message according to the request message when the related information does not satisfy the notification restraint condition.

For the specific implementing process, reference may be made to the description in step S 14.

The PAL server according to this embodiment may determine whether the service requester's information related to the notification restraint condition satisfies the notification restraint condition. In this way, the burden of a client of the service requester is reduced, and the interactive traffic between the client of the service requester and the PAL server is reduced, thereby utilizing network resources more efficiently. The interference with the service requester is reduced, and the user experience is improved.

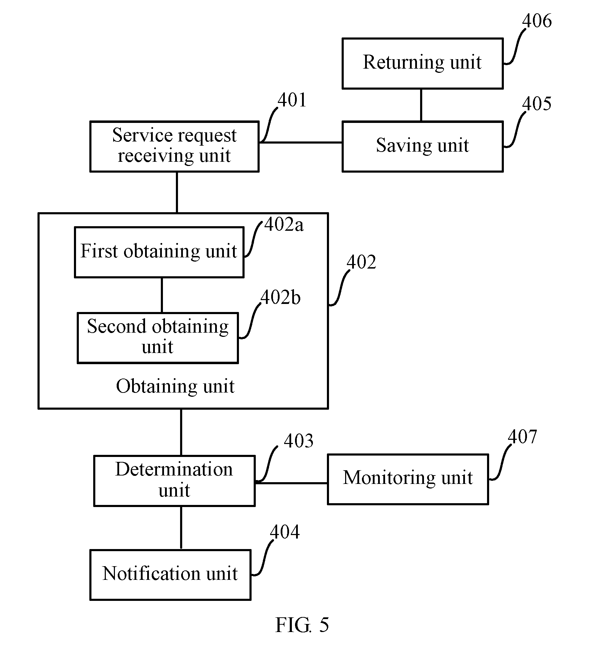

Furthermore, as shown in FIG 5, in this embodiment, the notification restraint condition may be represented by the situation that a specific aspect of the service requester satisfies a preset value, and the aspect is an integration of one or more information elements.

The obtaining unit 402 may include a first obtaining unit 402a and a second obtaining unit 402b.

The first obtaining unit 402a is configured to obtain a definition of the aspect according to the notification restraint condition.

Specifically, the definition of the aspect is obtained from a server saving definitions of aspects according to an aspect identifier carried in the notification restraint condition, or the definition of the aspect carried in the notification restraint condition is directly obtained.

The second obtaining unit 402b is configured to obtain the service requester's information related to the aspect according to the definition of the aspect.

Specifically, the aspect-related information of the service requester is obtained from a server saving related information. For example, location information is obtained from a location server, and status information is obtained from a presence server.

The determination unit 403 is specifically configured to calculate an aspect value of the aspect-related information of the service requester according to the definition of the aspect, and to determine whether the aspect value satisfies the preset value.

For the specific implementing process, reference may be made to the description in the embodiments in FIG 2 and FIG 3, and the details will not be described herein again.

Optionally, the PAL server may further include a saving unit 405, a returning unit 406, and a monitoring unit 407. The saving unit 405 is configured to save the definition of the aspect when the notification restraint condition carries the definition of the aspect.

Specifically, the definition of the aspect may be saved in a specific storage device according to an instruction of the client, or the definition of the aspect may be saved in the specific storage device when the definition of the aspect is found not saved.

The returning unit 406 is configured to return a storage path of the definition of the aspect and/or a definition of an aspect trigger to the service requester.

The monitoring unit 407 is configured to monitor the service requester's information related to the notification restraint condition when it is determined that the notification restraint condition is s satisfied.

When the request message further includes a notification triggering condition and the notification triggering condition is represented by the situation that a service is triggered when a specific aspect of a service receiver satisfies a preset value, the determination unit 403 is further configured to determine whether an aspect value of aspect-related information of the service receiver satisfies the preset value. If yes, the determination unit 403 determines that the notification triggering condition is satisfied. The notification unit 404 is specifically configured to send the notification message when the notification triggering condition is satisfied and the notification restraint condition is not satisfied.

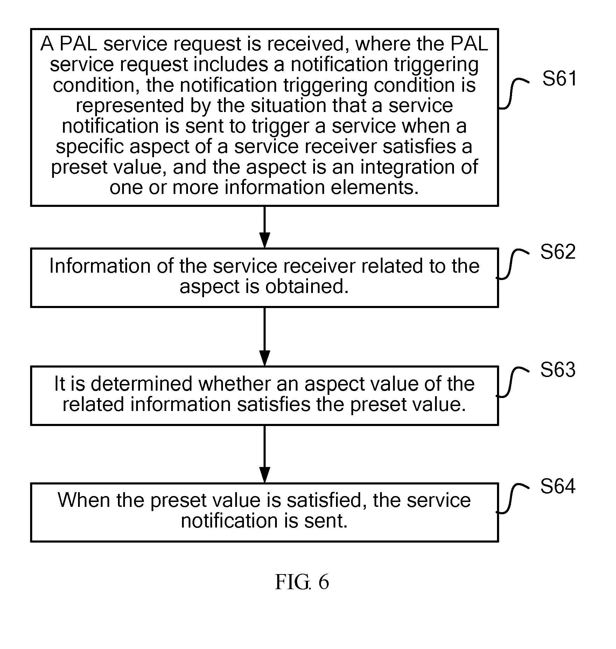

FIG. 6 is a flow chart of a method for sending a notification message according to an embodiment of the present invention. The method includes the following steps. In step S61, a request message is received, where the request message includes a notification triggering condition, the notification triggering condition is represented by the situation that the notification message is sent when a specific aspect of a service receiver satisfies a preset value, and the aspect is an integration of one or more information elements.

For the concept and definition of the aspect, reference may be made to the description in the embodiment in FIG 1, and the details will not be described herein again.

In step S62, the service receiver's information related to the aspect is obtained.

A PAL server obtains the definition of the aspect according to the notification triggering condition and obtains the service receiver's information related to the aspect according to the definition of the aspect.

The notification triggering condition may carry the following information: (1) an identifier of an aspect trigger, (2) a definition of the aspect trigger, (3) the identifier of the aspect trigger and the definition of the aspect, or (4) the definition of the aspect trigger and the definition of the aspect.

The aspect trigger is configured to monitor a change of a value of the aspect, that is, the PAL server is instructed to perform a corresponding operation when the value of the aspect satisfies a preset value. An example of the definition of the aspect trigger is shown as follows.

```
          <trigger name="IM-session on IM-availability">
             <condition id="a">
                <changed to="available">
                    <aspect id="a">IM-availability</aspect>
                </changed>
                .....
             </condition>
                <action>
                <service>IM-session</service>
                .....
             </action>
          </trigger>
```

Herein, <trigger> represents a definition of a trigger; an attribute "name" of <trigger> represents an identifier of the trigger, and the identifier of the trigger is "IM-session on IM-availability" in this example; sub-elements <condition> and <action> of <trigger> represent a triggering condition and a triggered action respectively; a sub-element <changed> of <action> represents a change condition on the basis of the value of the aspect; an attribute "to" of <changed> represents a specific value of a change; a sub-element <aspect> of <changed> represents which aspect or aspects the change condition is directed to, where <changed> is an optional element, that is, besides the change condition on the basis of the value of the aspect, the trigger may also be based on other types of conditions, for example, the number of persons satisfying a condition, and specifically, the condition may be set according to specific requirements; <service> of the element <action> represents a type of a triggered service, and may also be an optional element, that is, the triggered action is not limited herein and may also include other types of actions such as service termination.

The notification triggering condition may carry only the identifier of the aspect trigger. For example, the notification triggering condition is represented as follows.

```
          <?xml version="1.0" encoding="UTF-8"?>
             <pal-trigger xmlns="urn: oma:xml : pal-trigger" >
                 <trigger id="a">
             <reference form=" name">IM-session on IM-availability</reference>
                 </trigger>
             </pal-trigger>
```

Herein, <pal-trigger> represents an aspect trigger of the PAL; a sub-element <trigger> of <pal-trigger> represents a specific trigger; an attribute "id" of the element <trigger> is configured to identify the trigger; a sub-element <reference> of <trigger> represents that the trigger is used by reference; and an attribute "form" of <reference> represents a reference mode of the trigger, and a value of the attribute "form" may be "name", "sequence", and "url", respectively representing a name, a sequence number, and a reference path.

Because the aspect trigger already includes the identifier of the aspect, if the notification triggering condition already includes the aspect trigger, the notification triggering condition does not need to carry the identifier of the aspect, but may directly carry the definition of the involved aspect trigger or aspect. For the definition of the aspect, reference may be made to the description in the embodiment in FIG 1, and the details will not be described herein again.

The obtaining, by the PAL server, the definition of the aspect according to the notification triggering condition includes the following steps.

The definition of the aspect trigger is obtained according to the identifier of the aspect trigger carried in the notification triggering condition, then the identifier of the aspect is obtained according to the definition of the aspect trigger, and the definition of the aspect is obtained according to the identifier of the aspect.

Or, the identifier of the aspect is obtained according to the definition of the aspect trigger carried in the notification triggering condition, and the definition of the aspect is obtained according to the identifier of the aspect.

Specifically, the definitions are obtained from servers for saving the definition of the aspect trigger and the definition of the aspect, and the definition of the aspect trigger and the definition of the aspect may be saved in one server.

Furthermore, the PAL server may also obtain the definition of the aspect carried in the notification triggering condition.

In step S63, it is determined whether an aspect value of the related information satisfies the preset value.

The process specifically includes the following steps.

The PAL server calculates the aspect value of the aspect-related information of the service receiver according to the definition of the aspect.

Reference may be made to the description in step S 12b, and in this case, the service requester in step S12b is the service receiver.

The PAL server determines whether the aspect value satisfies the preset value.

In step S64, when the preset value is satisfied, the notification message is sent.

The receiving party of the notification message may be a sending party of the request message, that is, a service requesting party, and may also be a service receiving party or an application server, where service receiving parties may be one or more.

In this embodiment, by adopting the aspect to set the notification triggering condition, the byte size of the request message may be reduced, so that the service requester does not need to assign a value for each information element in the condition, which may reduce the burden of a client and the interactive traffic between the client and the server, and may make the requester perform operation simply and conveniently.

Furthermore, on the basis of this embodiment, if the definition of the aspect trigger and/or aspect is directly carried in the notification triggering condition, the PAL server may save the definition of the aspect trigger and/or aspect when finding that the definition of the aspect trigger and/or aspect is not saved, and return a storage path of the definition of the aspect trigger and/or aspect to the service requester. Specifically, the definition of the aspect trigger and/or aspect may be saved in a specific storage device according to an instruction of a terminal, or the definition of the aspect trigger and/or aspect may be saved in a specific storage device by the PAL server. In this way, a user may only need to provide an identifier when the same aspect trigger and/or aspect is used next time, thereby making the user perform the operation simply and conveniently.

Moreover, in the above mentioned embodiment, when the PAL server determines that the aspect value of the aspect-related information of the service receiver satisfies the preset value in step S63, the PAL server monitors the aspect-related information of the service receiver. When the aspect-related information of the service receiver changes, the PAL server determines again whether the aspect value of the changed related information satisfies the preset value, so as to send the notification message in time.

In the embodiment of the present invention, the request message in step S61 may be about a service triggering request or a subscription request.

When the request message is about the service triggering request, the notification message in step S64 is about a service triggering notification.

When the request message is about the subscription request, the notification message in step S64 is about a changed subscribed-to information notification, and the notification triggering condition in step S61 is represented by the situation that the changed subscribed-to information notification is sent when an aspect value of changed subscribed-to information satisfies a preset value. In step S62, specifically, it is determined whether the aspect value of the subscribed-to information after the change satisfies the preset value. In step S64, when the preset value is satisfied, the changed subscribed-to information notification is sent to the service requester (that is, the subscriber).

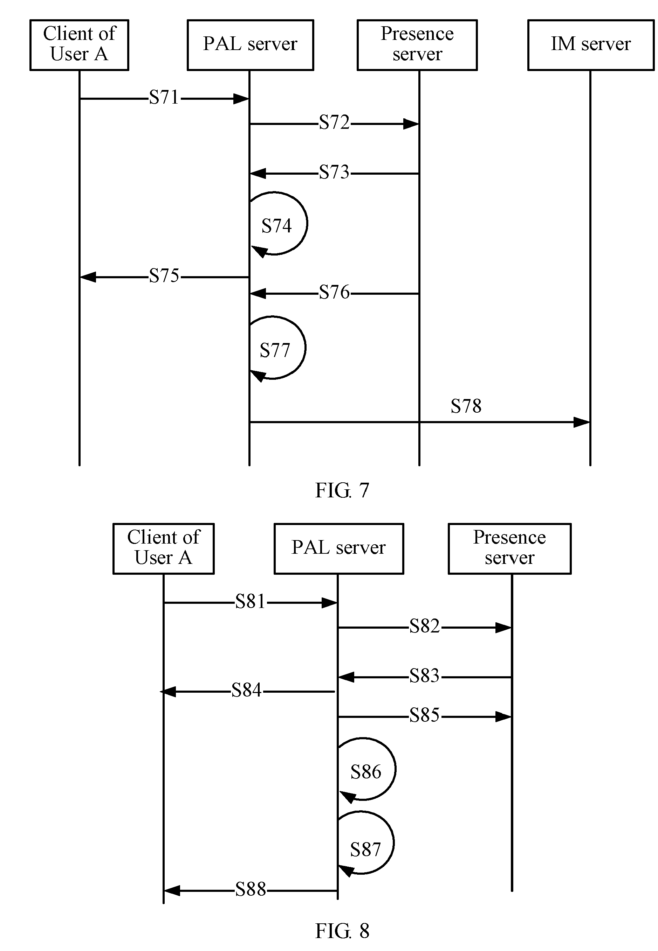

FIG 7 is a flow chart of another method for sending a notification message according to an embodiment of the present invention, where a request message is a service triggering request. In this embodiment, user A wishes to make a session with friend B when friend B is IM available and wishes that an IM server is triggered to establish a session channel between user A and friend B when a PAL server detects that a value of an aspect of friend B, identified with "IM-availability", is "available".

In step 71, user A sends a service triggering request, carries a notification triggering condition, to the PAL server through a PAL client on his terminal, that is, the IM server is triggered to establish the session channel between user A and friend B when the value of the aspect "IM-availability" of friend B is "available". If the request message is implemented by adopting SIP SUBSCRIBE, the message is shown as follows.

```
          SUBSCRIBE sip:friend@example.com SIP/2.0
          Via: SIP/2.0/TCP terminal.example.com;
          branch=z9hG4bKwYb6QREiCL
          Max-Forwards: 70
          To: <sip:friend@example.com
          From: <sip:a@example.com>;tag=ie4hbb8t
          Call-ID: cdB34qLToC@terminal.example.com
          CSeq: 322723822 SUBSCRIBE
          Contact: <sip:terminal.example.com>
          Event:pal
          Expires:600
          Accept: application/aspect-result+xml
          Content-Length: ......
          Content-Type: application/pal-trigger+xml
          <?xml version=" 1.0" encoding="UTF-8"?>
             <pal-trigger xmlns="urn:oma:xml:pal-trigger">
             xmlns:sf="urn:ietf params:xml:ns:simple-filter">
                 <sf:trigger>
                     <condition>
                       <sf changed to="available">
                           <aspect>IM-availability</aspect>
                       </sfchanged>
                     </condition>
                     <action id="a">
          <service>IM-session</service>
                     </action>
                 </sf:trigger>
             </pal-trigger>
```

Herein, an element <pal-trigger> represents an aspect trigger in a PAL. A sub-element <trigger> of the element <pal-trigger> represents a specific trigger setting, and includes sub-elements <condition> and <action> respectively representing a triggering condition and a triggered action when the triggering condition is satisfied. A sub-element <changed> of the element <condition> represents a change of a value; a value of an attribute "to" of the element <changed> is "available", indicating that the value is changed to "available", and a value of a sub-element <aspect> of the element <changed> is "IM-availability" indicating that the condition is to monitor the change of the value of the aspect "IM-availability". The other element <action> has a sub-element <service> representing a type of a service triggered when the triggering condition is satisfied, and the type of the triggered service is an IM session in this embodiment.

In step S72, the PAL server receives the request and then parses the request, and obtains related presence information of friend B from a presence server according to a definition of the aspect "IM-availability" .

In step S73, the presence server returns the related presence information of friend B to the PAL server after authenticating user A successfully.

In step S74, the PAL server performs calculation on the received presence information of friend B according to a calculation rule of the aspect "IM-availability", and finds that a current value of the aspect "IM-availability" of friend B is "unavailable", and thus the notification triggering condition is not satisfied and the PAL server continues to monitor the related presence information of friend B.

In step S75, the PAL server sends the value of the aspect "IM-availability" of the friend B to user A. If the notification message adopts SIP MESSAGE, the message is shown as follows.

```
          NOTIFY sip:a@example.com SIP/2.0
          Via: SIP/2.0/TCP pal-server.example.com;branch=z9hG4bK4EPlfSFQK1
          Max-Forwards: 70
          From: <sip:pal-server.example.com>;tag=zpNctbZq
          To: <sip:a@example.com>;tag=ie4hbb8
          Call-ID: cdB34qLToC@terminal.example.com
          CSeq: 997935769 NOTIFY
          Contact: <sip:pal-server.example.com>
          Event: pal
          Subscription-State: active;expires=600
          Content-Type: application/aspect-result+xml
          Content-Length: ......
          <?xml version=" 1.0" encoding="UTF-8"?>
          <pal-result xmlns="urn:oma:xml:pal-result">
               <entry uri="sip:friend@example.com ">
                  <aspect name=" IM-availability " >unavailable</aspect>
               </entry>
          </pal-result>
```

Herein, an element <pal-result> represents a result sent to a client by a server; a sub-element <entry> represents information of a subscribed-to party; an attribute "uri" of the element <entry> represents an identity of the subscribed-to party which is an SIP URI (Uniform Resource Identifier) of friend B; a sub-element <aspect> of the element <entry> represents a value of an aspect, and an attribute "name" of the element <aspect> represents a name of the aspect.

In step S76, the presence server notifies changed presence information of friend B to the PAL server.

In step S77, the PAL server performs calculation on the received presence information of friend B according to the calculation rule of the aspect "IM-availability" again, and finds that a current value of the aspect "IM-availability" of the friend B is "available", and thus the notification triggering condition is satisfied.

In step S78, the PAL server sends a service triggering notification to the IM server, so as to notify the IM server to establish a session between user A and friend B. If the service triggering notification is implemented by adopting SIP MESSAGE, the message is shown as follows.

```
          MESSAGE sip:IM-server.example.com SIP/2.0
          From: sip:pal-server.example.com;tag=49513
          To: sip: IM-server.example.com
          Content-Type: application/pal-sernot+xml
          <?xml version="1.0" encoding="UTF-8"?>
          <pal-sernot xmlns="urn:oma:xml:pal-sernot"
          xmlns:l="urn:ietf:params:xml:ns:resource-lists">
          <l:list>
          <l:entry uri="sip:a@example.com" />
          <l:entry uri="sip:friend@example.com" />
          </l:list>
          <service>
                 IM-session
          </service>
          </pal-sernot>
```

Here, an element <pal-sernot> represents the service triggering notification sent by the PAL server to an application server; a sub-element <list> of the element <pal-sernot> represents participants in a service; a sub-element <entry> of the element <list> is configured to represent a single participant, and an attribute "uri" of the element <entry> represents an identity of the participant; and another sub-element <service> of <pal-sernot> represents a type of a triggered service.

In this embodiment, by adopting the aspect to set the notification triggering condition, the byte size of the request message may be reduced, so that the service requester does not need to assign a value for each information element in the condition, which may reduce the burden of a client and the interactive traffic between the client and the server, and may make the requester perform operation simply and conveniently. Moreover, when the triggering condition is not satisfied, the PAL server monitors the related information of the service receiver, so that the PAL server may trigger a service in time when the triggering condition is satisfied.

FIG 8 is a flow chart of yet another method for sending a notification message according to an embodiment of the present invention, where a request message is about a subscription request. In this embodiment, user A wishes to make a CPM session with user B, and user A concerns whether user B may be contacted through CPM. Then, user A subscribes to an aspect "CPM-reachability" of user B from a PAL server and wishes that the server sends a notification of the aspect "CPM-reachability" of user B to user A only when a value of the aspect "CPM-reachability" of user B is "true".

Specifically, the service flow in this embodiment is as follows.

In step S81, user A sends a request to the PAL server through a PAL client to subscribe to a value of the aspect "CPM-reachability" of user B, where the subscription request carries a notification triggering condition set by user A, that is, only when the value of the aspect "CPM-reachability" of user B is "true", the server sends a notification to user A. If the subscription request adopts SIP SUBSCRIBE, the message is shown as follows.

```
          SUBSCRIBE sip:b@example.com SIP/2.0
          Via: SIP/2.0/TCP terminal.example.com;
          branch=z9hG4bKwYb6QREiCL
          Max-Forwards: 70
          To: <sip:b@example.com
          From: <sip:a@example.com>;tag=ie4hbb8t
          Call-ID: cdB34qLToC@terminal.example.com
          CSeq: 322723822 SUBSCRIBE
          Contact: <sip:terminal.example.com>
          Event:pal
          Expires:600
          Accept: application/aspect-result+xml
          Content-Length: ......
          Content-Type: multipart/mixed; boundary=example-1
          --example-1 I
          Content-Type: application/ pal-trigger +xml
          <?xml version=" 1.0" encoding="UTF-8"?>
          <pal-trigger xmlns="urn:oma:xml:pal-trigger">
          <changed to="available">
               <aspect id="a">
                   CPM-reachability
               </aspect>
          </changed>
          </pal-trigger>
```

Herein, the meaning of each element in the message body is the same as that of the corresponding element in the embodiment shown in FIG 3, and the details will not be described herein again.

In step S82, the PAL server parses the received subscription request and obtains related presence information of user B from a presence server according to a definition of the aspect "CPM-reachability" .

Specifically, the definition of the aspect "CPM-reachability" is first obtained from a server saving definitions of aspects, and then the aspect-related information of user B is obtained from the presence server.

In step S83, the presence server returns the related presence information of user B.

In step S84, the PAL server returns the related presence information of user B to user A.

An aspect value of the related presence information of user B may be calculated and returned to user A.

In step S85, the PAL server subscribes to the related presence information of user B.

The PAL server may actively obtain the related presence information of user B from the presence server; or the presence server may notify the changed related presence information of user B to user A, after the related presence information of user B changes.

In step S86, the PAL server performs calculation on the received changed related presence information of user B according to a calculation rule specified in the definition of the aspect "CPM-reachability" to obtain a current value of the aspect of the changed related presence information of user B.

In step S87, the PAL server determines whether the current value of the aspect of user B satisfies the notification triggering condition.

If the current value of the aspect of user B is "available", the procedure proceeds to step S85.

If the current value of the aspect of user B is not "available", the PAL server continues to monitor the aspect-related information of user B.

In step S88, the PAL server notifies the current value of the aspect "CPM-reachability" of user B to the PAL client of user A.

For details, reference may be made to the description in step 535.

In this embodiment, by adopting the aspect to set the notification triggering condition in the subscription request, the byte size of the request message may be reduced, so that the subscriber does not need to assign a value for each information element in the condition, which may reduce the burden of the client and the interactive traffic between the client and the server, and may make the subscriber perform operation simply and conveniently. Moreover, when the triggering condition is not satisfied, the PAL server monitors the related information of a subscribed-to party, so that the PAL server may notify the related information of the subscribed-to party to the subscriber in time when the triggering condition is satisfied.

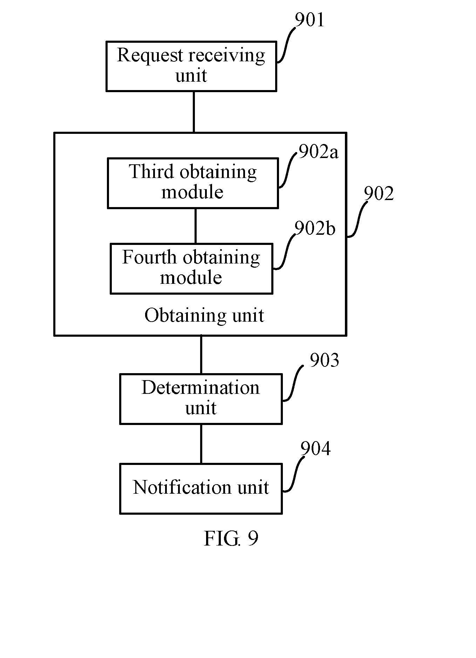

FIG 9 is a schematic diagram of a device for sending a notification message according to an embodiment of the present invention. The device includes a request receiving unit 901, an obtaining unit 902, a determination unit 903, and a notification unit 904.

The request receiving unit 901 is configured to receive a request message, where the request message includes a notification triggering condition, the notification triggering condition is represented by the situation that the notification message is sent when a specific aspect of a service receiver satisfies a preset value, and the aspect is an integration of one or more information elements.

For the specific implementation, reference may be made to the description in step 561.

The obtaining unit 902 is configured to obtain the aspect-related information of a service requester, and includes a third obtaining module 902a and a fourth obtaining module 902b.

The third obtaining module 902a is configured to obtain a definition of the aspect according to the notification triggering condition.

The fourth obtaining unit 902b is configured to obtain the aspect-related information of the service receiver according to the definition of the aspect.

The determination unit 903 is configured to determine whether an aspect value of the related information satisfies the preset value, and specifically configured to calculate the aspect value of the related information according to the definition of the aspect and determine whether the aspect value satisfies the preset value. For the specific implementing process of the determination unit 903, reference may be made to the description in step S63, so that the details will not be described herein again.

The notification unit 904 is configured to send the notification message when the preset value is satisfied.

The device for sending a notification message in this embodiment may parse the notification triggering condition represented by adopting the aspect, make a determination according to the condition and perform a corresponding operation, so that the service requester does not need to assign a value for each information element in the condition, which may reduce the burden of a client and the interactive traffic between the client and the server, and may make the requester perform operation simply and conveniently.

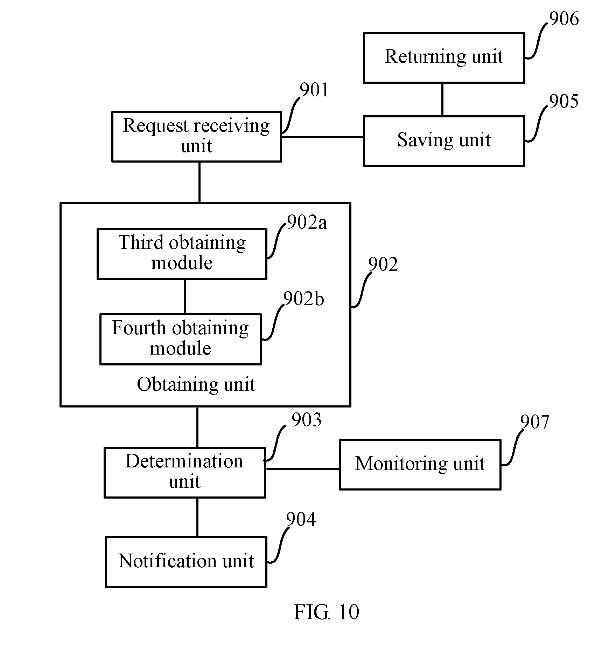

As shown in FIG 10, optionally, the device for sending a notification message may further include a saving unit 905, a returning unit 906, and a monitoring unit 907. The saving unit 905 is configured to save a definition of an aspect trigger and/or the definition of the aspect when the notification triggering condition carries the definition of the aspect trigger and/or aspect.

Specifically, the definition of the aspect trigger and/or aspect may be saved in a specific storage device according to an instruction of a terminal, or the definition of the aspect trigger and/or aspect may be saved in a specific storage device by the saving unit. In this way, a user may only need to provide an identifier when the same aspect trigger and/or aspect is used next time, thereby making the user perform operation simply and conveniently.

The returning unit 906 is configured to return a storage path of the definition of the aspect trigger and/or aspect to the service requester.

The monitoring unit 907 is configured to monitor the related information when the aspect value of the aspect-related information of the service requester does not satisfy the preset value.

Therefore, when the aspect-related information of the service receiver changes, it is determined again whether the aspect value of the changed related information satisfies the preset value, so as to send the notification message in time.

It should be noted that, the embodiments of the present invention do not need to introduce separate function parts and may be accomplished through software plus a necessary universal hardware platform. Based on this, the above-mentioned technical solutions or the part that makes contributions to the prior art may be substantially embodied in the form of a software product. The computer software product may be stored in a storage medium, and include several instructions to perform the method described in the embodiments of the present invention. Herein, the storage medium is, for example, a Read Only Memory/Random Access Memory (ROM/RAM), a magnetic disk, or an optical disk.

Based on the above, the mentioned descriptions are merely exemplary embodiments of the present invention, but are not intended to limit the present invention. Any modification, equivalent replacement, or improvement made without departing from the spirit and principle of the present invention should fall within the protection scope of the present invention.

## Claims

1. A method for sending a notification message, comprising:
receiving, by a Presence Access Layer (PAL) server, a request message, wherein the request message includes a notification restraint condition;
obtaining, by the PAL server, a service requester's information related to the notification restraint condition;
determining, by the PAL server, whether the service requester's information related to the notification restraint condition satisfies the notification restraint condition; and
when the notification restraint condition is not satisfied, sending, by the PAL server, the notification message according to the request message.

2. The method according to claim 1, wherein the notification restraint condition is represented by the situation that a specific aspect of the service requester satisfies a preset value, and the aspect is an integration of one or more information elements.

3. The method according to claim 2, wherein the obtaining, by the PAL server, the service requester's information related to the notification restraint condition comprises:
obtaining, by the PAL server, a definition of the aspect according to the notification restraint condition, and obtaining aspect-related information of the service requester according to the definition of the aspect.

4. The method according to claim 3, wherein the determining, by the PAL server, whether the obtained information of the service requester satisfies the notification restraint condition comprises:
calculating an aspect value of the aspect-related information of the service requester according to the definition of the aspect; and
determining whether the aspect value satisfies the preset value.

5. The method according to claim 3, wherein the obtaining, by the PAL server, the definition of the aspect according to the notification restraint condition comprises:
when the notification restraint condition carries an identifier of the aspect, obtaining the definition of the aspect according to the identifier of the aspect; or
when the notification restraint condition carries the definition of the aspect, obtaining the definition of the aspect.

6. The method according to claim 5, further comprising:
when the notification restraint condition carries the definition of the aspect, saving, by the PAL server, the definition of the aspect, and returning, by the PAL server, a storage path of the aspect definition to the service requester.

7. The method according to any one of claims 1 to 6, wherein
the request message is about a service triggering request or a subscription request;
when the request message is about the service triggering request, the notification message is about a service triggering notification; and
when the request message is about the subscription request, the notification message is about a changed subscribed-to information notification, and the determining, by the PAL server, whether the obtained information of the service requester satisfies the notification restraint condition specifically comprises:
when subscribed-to information changes, determining, by the PAL server, whether the service requester's information related to the notification restraint condition satisfies the notification restraint condition.

8. The method according to claim 1, wherein the request message further includes a notification triggering condition, and the method further comprises:
Obtaining, by the PAL server, a service receiver's information related to the notification triggering condition;
determining, by the PAL server, whether the service receiver's information related to the notification triggering condition satisfies the notification triggering condition; and
when the service receiver's information related to the notification triggering condition satisfies the notification triggering condition and the service requester's information related to the notification restraint condition does not satisfy the notification restraint condition, sending, by the PAL server, the notification message.

9. The method according to claim 8, wherein
the notification triggering condition is represented by the situation that the notification message is sent when a specific aspect of the service receiver satisfies a preset value, and the aspect is an integration of one or more information elements; and
the determining, by the PAL server, whether the service receiver's information related to the notification triggering condition satisfies the notification triggering condition specifically comprises: determining an aspect value of the aspect-related information of the service receiver satisfies the preset value in the notification triggering condition.

10. The method according to claim 1, wherein when the service requester's information related to the notification restraint condition satisfies the notification restraint condition, the PAL server monitors the related information.

11. A method for sending a notification message, comprising:
Receiving a request message, wherein the request message includes a notification triggering condition, the notification triggering condition is represented by the situation that the notification message is sent when a specific aspect of a service receiver satisfies a preset value, and the aspect is an integration of one or more information elements;
obtaining the aspect-related information of the service receiver;
determining whether an aspect value of the related information satisfies the preset value; and
when the preset value is satisfied, sending the notification message.

12. The method according to claim 11, wherein
the obtaining the aspect-related information of the service receiver comprises:
obtaining a definition of the aspect according to the notification triggering condition, and obtaining the aspect-related information of the service receiver according to the definition of the aspect; and
the determining whether the aspect value of the related information satisfies the preset value specifically comprises: calculating the aspect value of the related information according to the definition of the aspect, and determining whether the aspect value satisfies the preset value.

13. The method according to claim 11, wherein
the obtaining the definition of the aspect according to the notification triggering condition comprises:
when the notification triggering condition carries an identifier of an aspect trigger, obtaining a definition of the aspect trigger according to the identifier of the aspect trigger, obtaining an identifier of the aspect according to the definition of the aspect trigger, and obtaining the definition of the aspect according to the identifier of the aspect;
when the notification triggering condition carries the definition of the aspect trigger, obtaining the identifier of the aspect according to the definition of the aspect trigger, and obtaining the definition of the aspect according to the identifier of the aspect; or
when the notification triggering condition carries the definition of the aspect, obtaining the definition of the aspect.

14. The method according to claim 11, wherein
when the notification triggering condition carries a definition of an aspect trigger and/or the aspect, saving the definition of the aspect trigger and/or aspect, and returning a storage path of the definition of the aspect trigger and/or aspect to a service requester.

15. The method according to claim 11, wherein the request message is about a service triggering request or a subscription request;
when the request message is about the service triggering request, the notification message is about a service triggering notification; and
when the request message is about the subscription request, the notification message is a changed subscribed-to information notification, and the representing the notification triggering condition by the situation that the notification message is sent when the specific aspect of the service receiver satisfies the preset value specifically comprises: representing the notification triggering condition by the situation that the changed subscribed-to information notification is sent when an aspect value of changed subscribed-to information satisfies the preset value.

16. The method according to claim 11, wherein when the aspect value of the aspect-related information of the service receiver does not satisfy the preset value, the related information is monitored.

17. A Presence Access Layer (PAL) server, comprising:
a service request receiving unit, configured to receive a request message, wherein the request message includes a notification restraint condition;
an obtaining unit, configured to obtain a service requester's information related to the notification restraint condition;
a determination unit, configured to determine whether the related information satisfies the notification restraint condition; and
a sending unit, configured to send a notification message according to the request message when the related information does not satisfy the notification restraint condition.

18. The PAL server according to claim 17, wherein the notification restraint condition is represented by the situation that a specific aspect of the service requester satisfies a preset value, and the aspect is an integration of one or more information elements;
the obtaining unit comprises:
a first obtaining unit, configured to obtain a definition of the aspect according to the notification restraint condition; and
a second obtaining unit, configured to obtain aspect-related information of the service requester according to the definition of the aspect; and
the determination unit is specifically configured to calculate an aspect value of the aspect-related information of the service requester according to the definition of the aspect and determine whether the aspect value satisfies the preset value.

19. The PAL server according to claim 17, further comprising:
a saving unit, configured to save a definition of an aspect when the notification restraint condition carries the definition of the aspect; and
a returning unit, configured to return a storage path of the definition of the aspect and/or a definition of an aspect trigger to the service requester.

20. The PAL server according to claim 17, wherein the request message further includes a notification triggering condition;
the determination unit is further configured to determine whether a service receiver's information related to the notification triggering condition satisfies the notification triggering condition; and
the sending unit is specifically configured to send the notification message when the service receiver's information related to the notification triggering condition satisfies the notification triggering condition and the service requester's information related to the notification restraint condition does not satisfy the notification restraint condition.

21. The PAL server according to claim 17, further comprising a monitoring unit, configured to monitor the related information when a service receiver's information related to the notification triggering condition satisfies the notification restraint condition.

22. A device for sending a notification message, comprising:
a request receiving unit, configured to receive a request message, wherein the request message includes a notification triggering condition, the notification triggering condition is represented by the situation that the notification message is sent when a specific aspect of a service receiver satisfies a preset value, and the aspect is an integration of one or more information elements;
an obtaining unit, configured to obtain aspect-related information of the service receiver;
a determination unit, configured to determine whether an aspect value of the related information satisfies the preset value; and
a notification unit, configured to send the notification message when the preset value is satisfied.

23. The device according to claim 22, wherein
the obtaining unit comprises:
a third obtaining module, configured to obtain a definition of the aspect according to the notification triggering condition; and
a fourth obtaining unit, configured to obtain the aspect-related information of the service receiver according to the definition of the aspect; and
the determination unit is specifically configured to calculate an aspect value of the related information according to the definition of the aspect and determine whether the aspect value satisfies the preset value.

24. The device according to claim 22, further comprising:
a saving unit, configured to save a definition of an aspect trigger and/or the aspect when the notification triggering condition carries the definition of the aspect trigger and/or aspect; and
a returning unit, configured to return a storage path of the definition of the aspect trigger and/or aspect to a service requester.

25. The device according to claim 22, further comprising:
a monitoring unit, configured to monitor the related information when the aspect value of the aspect-related information of the service receiver does not satisfy the preset value.
